# EUROPEAN PATENT SPECIFICATION

(11) **EP 2 881 896 B1**
(45) Date of publication and mention of the grant of the patent: **15.08.2018**
(21) Application number: 14196560.8
(22) Date of filing: 05.12.2014
(51) Int. Cl.: H04W 4/80, G06Q 10/10, H04B 5/00, H04W 4/00, H04W 12/06, G06K 19/07

(54) **Near field communication tag based data transfer**
Datenübertragung auf Basis von Nahfeldkommunikationsetiketten
Balise de communication en champ proche basée sur le transfert de données

(30) Priority: 06.12.2013 US 201314098572
(43) Date of publication of application: 10.06.2015
(73) Proprietor: SAP SE, 69190 Walldorf (DE)
(72) Inventor: Bhat, Raveeshkumar, 69190 Walldorf (DE)
(74) Representative: Richardt Patentanwälte PartG mbB

(56) References cited:
- EP-A1- 2 239 924
- WO-A1-2005/013506
- KR-A- 20130 131 088
- US-A1- 2013 322 296
- Poole Ian: "NFC Tags and Tag Types :: Radio-Electronics.Com", , 18 May 2013 (2013-05-18), XP055179869, Retrieved from the Internet: URL:http://www.radio-electronics.com/info/ wireless/nfc/near-field-communications-tag s-types.php [retrieved on 2015-03-27]

## Description

### BACKGROUND

Near field communication, or NFC, is a set of short-range wireless technologies. NFC standards cover communications protocols and data exchange formats, and are based on existing Radio Frequency. NFC generally involves a NFC tag. Although the integration of the NFC technology in electronic systems has rapidly increased and spread throughout the industry, the use of NFC tags has lagged substantially behind.

Internet document, Pool Ian, "http://www.radio-electronics.com/info/wireless/nfc/near-field-communications-tags-types.php" discloses a summary overview of Near Field Communications NFC tags and definitions for the four tag types.

US 2013/322296 A1 discloses a method and system of providing internet protocol data communication in a nfc peer to peer communication environment.

WO 2005/013506 A1 discloses a communication device for establishing a data connection between intelligent appliances.

### SUMMARY

Various embodiments provide a communication method, a NFC tag and an access control system as described by the subject matter of the independent claims. Advantageous embodiments are described in the dependent claims.

In one aspect, the invention relates to a communication method for controlling operation of a near field communication, NFC, tag, wherein the NFC tag is operating in accordance with a first operation mode. The method comprises the steps of:
- Receiving, a data request sent by a first mobile telecommunication device, the data request being received via a NFC antenna of the NFC tag for providing access information of the first mobile telecommunication device;
- determining an access frequency of the first mobile telecommunication device to the NFC tag, wherein the access frequency is the number of accesses per time;
- in response to a determination that the access frequency is higher than a predetermined maximum frequency;
   - establishing a communication link to a database system connected to the NFC tag;
   - switching the NFC tag to a second operation mode for communication with the database system;
   - forwarding the data request to the database system using the communication link;
   - receiving the access information from the database system via the communication link;
   - switching back to the first operation mode and sending the received access information to the first mobile telecommunication device via the NFC antenna.
- in response to a determination that the access frequency is smaller than the predetermined maximum frequency sending locally stored access information data in response to the data request to the first mobile telecommunication device.

The NFC tag may store locally an amount of data smaller than a predefined threshold e.g. 1% of the total size of the non-volatile memory of the NFC tag. For example, the database system may store data related to the first mobile telecommunication that in amount smaller (e.g. 10% smaller) than the storage size (e.g. volatile and/or non-volatile memory size) of the NFC tag. Storing data locally may be advantageous as it may speed up the data access process compared to the case where data is stored in the database system.

The first mobile telecommunication device may be an NFC enabled device.

These features may have the advantage of providing a controlled, optimal and efficient access to data using the NFC tag. These features may provide access to up-to-date dynamic data that may change over time. The change over time may lead to an increase in the amount of the accessed data which then may be stored on the database system if there is not enough space in the NFC tag.

According to one embodiment, the determining of the access frequency further comprising: in response to a determination that the number of access of the access frequency is an odd number rejecting the data request.

This embodiment may provide a secure access to the access information by preventing potential malicious access by suspicious devices. For example, mobile telecommunication devices may be controlled to use or contact the NFC tag for logging e.g. to a WiFi network, and another time for logging out. This means that when the first mobile telecommunication device has access the NFC tag e.g. 59 times per month means that in a given day (e.g. the last day of the month) the first mobile telecommunication device has logged in without logging out in the given day which may be an indication of a suspicious act by the first mobile telecommunication device.

According to one embodiment, the first mobile telecommunication device is part of a set of mobile telecommunication devices that are authorized to access the NFC tag, wherein the maximum frequency is determined using the number of mobile telecommunication devices of the set of mobile telecommunication devices and a memory size of the NFC tag.

This embodiment may be advantageous as it may make use of the type of data being stored that is related to access information only for further increasing the access efficiency to the access information.

According to one embodiment, the first mobile telecommunication device is part of a set of mobile telecommunication devices that are authorized to access the NFC tag. The method further comprises receiving from a second mobile telecommunication device of the set of mobile telecommunication devices via the NFC antenna another data request for providing access information of the second mobile telecommunication device; in response to a determination that an access frequency of the second mobile telecommunication device is equal to the access frequency of the first mobile telecommunication device; sending an identification address of the first mobile telecommunication device to the second mobile telecommunication device in response to the received data request.

This may further increase the access efficiency to the access information by avoiding the submission of the same information twice to the two different mobile telecommunication devices. For example, in since the first and second mobile telecommunication devices have the same access frequencies, their corresponding access information e.g. the number of access may be the same. In this case the second mobile telecommunication device may use the access information sent to the first mobile telecommunication device e.g. by communicating with the first mobile telecommunication device.

According to one embodiment, the method further comprises receiving via the NFC antenna from the first mobile telecommunication device a data update in response to receiving the requested data at the first mobile telecommunication device; switching to the second operation mode and forwarding the data update to the database system using the communication link. This may for example provide up-to-date access information for subsequent access to the access information of the first mobile telecommunication device.

According to one embodiment, the switching step comprising: authenticating the first mobile telecommunication device; and in case the authentication is successful, forwarding the stored data update to the database system. This may provide a secure method as the first mobile telecommunication device may only have the read access right but not the write access right. This may control access to data stored in the NFC tag or the database system.

According to one embodiment, the method further comprises sending an unlock signal to a data communication unit via the database system for authorizing access of the first telecommunication device to the data communication unit. For example, the NFC tag may send the unlock signal to the database system and control the database system to forward the unlock signal to the data communication unit.

This may have the advantage of making use of a single connection to provide both the access information requested by the first mobile telecommunication device and to allow the first mobile telecommunication device to access the data communication unit. This may save resources that would otherwise be required for running separately the access permission and the data update.

In another example, the method further comprises sending an unlock signal to an automatic door opening and closing system via the database system for enabling (e.g. an automatic door opens) a user of the first mobile telecommunication device to access or enter a building that can only be accessed via the automatic door.

According to one embodiment, the access information comprises at least one of: a number of accesses of the first mobile telecommunication device to the NFC tag; an average access duration per a predefined time period of the first mobile telecommunication device.

According to one embodiment, in response to a determination that the access frequency is smaller than a predetermined minimum frequency rejecting the data request (and leaving the method). This may provide a secure access to the access information as a small access frequency (e.g. 0) may be an indication of a malicious access attempt.

According to one embodiment, the NFC tag is connected to the database system via a serial link, wherein establishing the communication link comprises sending a link setup command to the database system via the serial ink for establishing the communication link.

For example, before the switching to the second operation mode the NFC tag is powered using the NFC antenna, wherein after establishing the communication link the NFC tag is power supplied by the database system via a serial link between the NFC tag and the database system.

In another aspect, the invention relates to a NFC tag comprising a NFC antenna, the NFC tag operating in a first operation mode, wherein the NFC tag comprises:
- means for receiving a data request sent by a first mobile telecommunication device, the data request being received via a NFC antenna of the NFC tag for providing access information of the first mobile telecommunication device; characterized by
- means for determining an access frequency of the first mobile telecommunication device to the NFC tag, wherein the access frequency is the number of accesses per time;
- means for, in response to a determination that the access frequency is higher than a predetermined maximum frequency;
   - establishing a communication link to a database system connected to the NFC tag;
   - switching the NFC tag to a second operation mode for communication with the database system;
   - forwarding the data request to the database system using the communication link;
   - receiving the access information from the database system via the communication link;
   - switching back to the first operation mode and sending the received access information to the first mobile telecommunication device via the NFC antenna.
- means for, in response to a determination that the access frequency is smaller than the predetermined maximum frequency, sending locally stored access information data in response to the data request to the first mobile telecommunication device.

In another aspect, the invention relates to an access control system comprising a NFC tag, a mobile telecommunication device and a database server according to the previous embodiment. The database server may be configured for receiving a data request from the NFC tag and for sending in response to the received data request the access information via the communication link to the NFC tag. The mobile telecommunication device is an NFC enabled device. The mobile telecommunication device may be configured for sending to the NFC tag a data request for providing access information of the first mobile telecommunication device and fore receiving the access information from the mobile telecommunication device.

For example, the access control system further comprises a data communication configured for providing a network access to the mobile telecommunication device.

In another example, a computer implemented method for near field communication (NFC) based data transfer is provided. The method comprises a NFC tag, receiving dynamic data from a data management system; the NFC tag, forwarding the received dynamic data to a portable electronic device; based on the forwarded dynamic data, the NFC tag receiving data update from the portable electronic device; and forwarding, by the NFC tag, received data update to the data management system.

For example, the method further comprises the portable electronic device, activating the NFC tag; receiving, at the portable electronic device, the dynamic data for an application stored at the portable electronic device; at the portable electronic device, displaying the received dynamic data; based on the displayed dynamic data, receiving, at the portable electronic device, the data update; and the portable electronic device, forwarding the data update to the NFC tag.

For example, the method further comprises storing the received data update to the NFC tag.

For example, the method further comprises based on activating the NFC tag, detecting the stored data update at the portable electronic device; and forwarding the stored data update to the data management system.

For example, the method further comprises the NFC tag, authenticating the portable electronic device; and based on the authentication, the NFC tag forwarding the stored data update to the data management system.

For example, the method further comprises the NFC tag, sending a data retrieval request to the data management system; and based on the data retrieval request, the NFC tag receiving the dynamic data from the data management system.

For example, the method further comprises programming, by a processor of a computer, the NFC tag to transfer data between the portable electronic device and the data management system.

In another example, a computer system for near field communication (NFC) based data transfer is provided. The computer system comprises: a processor to execute a program code; and a memory coupled to the processor, the memory storing the program code comprising: receive, by a NFC tag, dynamic data from a data management system; forward, by the NFC tag, the received dynamic data to a portable electronic device; based on the forwarded dynamic data, receive, by the NFC tag, data update from the portable electronic device; and forward received data update to the data management system.

In another example an article of manufacture is provided. The article of manufacture includes a non-transitory computer readable storage medium to tangibly store instructions, which when executed by a computer, cause the computer to: receive, by a near field communication (NFC) tag, dynamic data from a data management system; forward, by the NFC tag, the received dynamic data to a portable electronic device; based on the forwarded dynamic data, receive, by the NFC tag, data update from the portable electronic device; and forward received data update to the data management system.

In another example, an article of manufacture is provided. The article of manufacture includes a non-transitory computer readable storage medium to tangibly store instructions, which when executed by a computer, cause the computer to: activate a near field communication (NFC) tag by a portable electronic device; send a data retrieval request, by the activated NFC tag, to retrieve dynamic data from a data management system; based on the data retrieval request, receive the dynamic data from the data management system; forward, by the NFC tag, the received dynamic data to the portable electronic device; based on the forwarded dynamic data, receive, by the NFC tag, data update from the portable electronic device; store the received data update to the NFC tag; and forward the received data update to the data management system.

### BRIEF DESCRIPTION OF THE DRAWINGS

FIG. 1 is a flow diagram illustrating a process for near field communication (NFC) based data transfer, according to an example.
FIGS. 2A-2B are flow diagrams illustrating an algorithm for a "data transfer" method written to a NFC tag, according to an example.
FIG. 3 is a sequence diagram illustrating a method for transferring data by a NFC tag, according to an example.
FIG. 4 is an exemplary user interface of a portable electronic device displaying a graphical user interface of a leave request application, according to an example.
FIG. 5 is an exemplary user interface of a portable electronic device displaying a success message, according to an example.
FIG. 6 is a block diagram illustrating a computing environment of near field communication based data transfer, according to an example.
FIG. 7 is a flowchart a method for controlling operation of a NFC tag.

### DETAILED DESCRIPTION

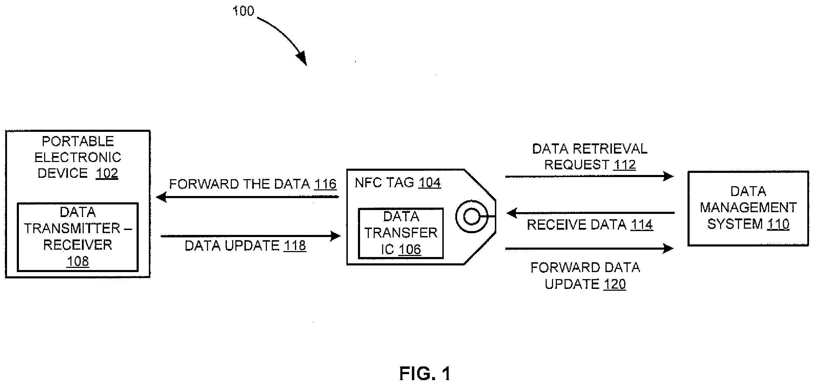

FIG. 1 is a block diagram illustrating a process 100 for near field communication based data transfer, according to an example. Near field communication (NFC) is a set of standards to establish radio communication between two devices which are in direct contact or within a predetermined range, for example, 10 centimeters, from each other. In one example, the near field communication is established between portable electronic device 102 and NFC tag 104. The NFC tag 104 is a passive device, for example, a sticker or a wristband, which includes "data transfer" integrated circuit (IC) 106. The "data transfer" IC 106 of the NFC tag 104 controls data transfer by the NFC tag 104. The portable electronic device 102 may be a handheld or wearable electronic device, for example, mobile phone, tablet computer, laptop, personal digital assistant, etc. In one example, the portable electronic device 102 is a NFC enabled portable electronic device that may establish NFC communication with the NFC tag 104. The portable electronic device 102 may include data transmitter-receiver module 108 for writing data to the NFC tag 104 and receiving data from the NFC tag 104.

In one example, the NFC tag 104 may be programmed to facilitate data transfer between the portable electronic device 102 and data management system 110. The data management system 110 may be a data server that stores and processes data. In one example, the data management system 110 may be provided in a cloud. Cloud computing addresses a variety of computing concepts that involve a large number of computers connected through a real-time communication network such as the Internet. In one example, programming the NFC tag 104 may include writing a "data transfer" program to the "data transfer" IC 106 of the NFC tag 104. The "data transfer" program defines a sequence of data transfer steps for two-way communication between the portable electronic device 102 and the NFC tag 104.
For example, the data transfer steps in the "data transfer" program may include: initially sending data retrieval request 112 to the data management system 110. Next, the NFC tag 104 may receive 114 data from the data management system 110, in response to the data retrieval request. Next, the NFC tag 104 forwards 116 the received data to the portable electronic device 102. Based on the received data, the portable electronic device 102 may send 118 data update to the NFC tag 104. The NFC tag 104 may finally forward 120 the received data update to the data management system 110.

In one example, several applications may use the "data transfer" program, written to the "data transfer" IC 106 of the NFC tag 104. The applications may use the "data transfer" program to perform application data transfer between the portable electronic device 102 and the data management system 110, at runtime. An application or an "app" is computer software that when executed performs a useful task. In one example, the applications may also be written to the "data transfer" IC 106 included in the NFC tag 104. The applications may be included in the "data transfer" program written to the "data transfer" IC 106 of the NFC tag 104. Alternatively, the application may be a stand-alone application written to the "data transfer" IC 106 of the NFC tag 104.

In one example, the NFC tag 104 allows a user of the portable electronic device 102 to access and update application data to the data management system 110, without requiring the user of the portable electronic device 102 to login to the data management system 110. Specifically, the data transfer steps included in the "data transfer" program written to the NFC tag 104 allows application data transfer between the portable electronic device 102 and the data management system 110, without requiring the user to login to the data management system 110.

For example, consider a "time recording" application that is used for recording time spent by a an NFC enabled portable electronic device (or potable electronic device) on a particular connection task e.g. connection time to a wireless netwok. In this case the "data transfer" program, included in the NFC tag, may facilitate data transfer between the NFC enabled portable electronic device and a data management system that manages information of portable electronic devices, including time spent by the NFC enabled portable electronic device on a particular connection task or session. The data transfer steps defined by the "data transfer" program may be used for transferring "time recording" application data between the data management system and the portable electronic device. Based on the "data transfer" program, initially the NFC tag may send a "data retrieval" request for receiving "time recording" data, for example, the "time spent" information that includes information of the time spent by the NFC enabled portable electronic device on different connection sessions. Based on the "data retrieval" request, the NFC tag receives the "time recording" data that includes, e.g., session names "Alpha" and "Beta", identification address of the NFC enabled portable electronic device "IJKL", and the time spent as "3 days" and "1 day" for sessions "Alpha" and "Beta", respectively, from the data management system. Next, the NFC tag forwards the "time recording" data to the portable electronic device. The NFC enabled portable electronic device may then update (automatically or upon receiving update data e.g. from a user of the portable electronic device) the "time recording" data for session "Beta" from "1 day" to "2 days", at the portable electronic device. The updated "time recording" data "2 days" is then forwarded to the NFC tag. Next, the NFC tag forwards the updated "time recording" data to the data management system that may be finally updated to the data management system.

In the "time recording" example described in the previous paragraph, the portable electronic device retrieves "time recording" data from the data management system and updates the "time recording" data to the data management system, using the NFC tag, without connecting to a network or the data management system. The NFC tag therefore allows a user to conveniently access and update application data without requiring a login to the data management system.

The programmed NFC tag 104, including the "data transfer" program, can be used by any number of applications that require one-way or two-way communication between the portable electronic device 102 and the data management system 110 to transfer application data. For example, the programmed NFC tag 104 may be used by a "leave request" application that requires a one-way communication to push a leave request, from the portable electronic device 102, to the data management system 110, without a user logging to the data management system 110.

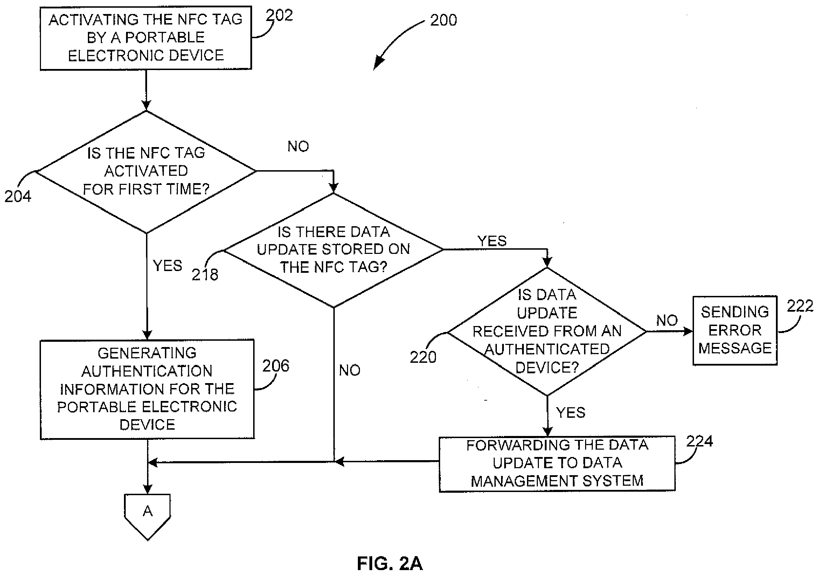

FIGS. 2A-2B are flow diagrams illustrating an algorithm for "data transfer" process 200 written to an NFC tag, according to an example. The "data transfer" process 200 may define data transfer steps for transferring data between two devices, for example, a portable electronic device and a data management system. In one example, the "data transfer" method may be included in a "data transfer" program that is written to a "data transfer" IC included in the NFC tag. After the write operation, the steps included in the "data transfer" method may be used to transfer application data, of an application, between the portable electronic device and the data management system.

In one example the "data transfer" process 200 includes initially, at 202 (FIG. 2A), activating the NFC tag by a portable electronic device. NFC tag, or a smart tag, may be a passive device that is capable of NFC communication. A passive device is a device that does not require a source of energy for its operation. The NFC tag may be activated based on the magnetic field induced by a NFC enabled portable electronic device that is in contact or proximity of the NFC tag. The NFC tag may be activated by a NFC enabled portable electronic device.

Next, a check is performed to determine whether the NFC tag is being activated for first time (at 204). The NFC tag may be activated for the first time when the NFC enabled portable electronic device is in contact or in proximity of the NFC tag, for the first time. In case the NFC tag is activated for the first time, authentication information is generated for the portable electronic device of the user, at 206. During the authentication information generation operation, a unique identification key may be generated and linked to user identification information related to the user of the portable electronic device.

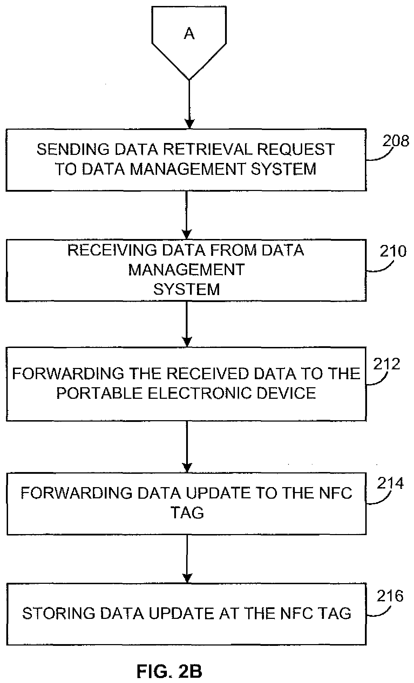

Next, at 208 (FIG. 2B), after the generation of authentication information, the NFC tag may send a data retrieval request to the data management system. The data retrieval request may be sent to retrieve data from the data management system.

Based on the data retrieval request, the NFC tag may receive data from the data management system (at 210). In one example, the data received by the NFC tag is dynamic data. Dynamic data denotes data that is asynchronously changed as further updates to the data become available. For example, "number of hours spent" on a project, by a user, is a dynamic data that changes based on the time spent by the user working on the project. In one example, the NFC tag is programmed to receive and send dynamic data.

Next, at 212, the NFC tag may forward the dynamic data received from the data management system to the portable electronic device. In one example, data update may be received at the portable electronic device. A user of the portable electronic device may want to update the dynamic data received from the NFC tag. In this case, the user may provide the data update at the portable electronic device. The data update may be an updated version of the dynamic data received from the data management system. In one example, the data update is the most recent version of the dynamic data that the user wants to upload to the data management system. For example, consider that the data received from the data management system is user's leave data that includes the number of leaves the user has applied for in a particular year. In case the leave data is incorrect, then the user may provide, at the portable electronic device, a leave data update with the correct number of leaves that the user wants to update to the data management system. The data update received at the portable electronic device may then be forwarded at 214, to an NFC tag that stores (218) the data update received from the portable electronic device. The data update may be stored in the "data transfer" IC included in the NFC tag.

When the NFC tag is activated and it is determined that the NFC tag has been activated before, a check is performed at 218 (FIG. 2A) to identify whether any data update for the dynamic data is stored on the NFC tag. In case, a data update is stored on the NFC tag, then a data authentication check may be performed at 220 to determine whether the data update is being received from an authenticated portable electronic device. The check at 220 may be performed based on the authentication information generated for the portable electronic device at 206. In case the device is an un-authenticated portable electronic device, an error message may be sent, at 222, to the user of the portable electronic device. In case the data update is received from an authenticated portable electronic device the data update stored on the NFC tag is forwarded to the data management system (224).

After the "data transfer" program including the "data transfer" process is written to the NFC tag, an application may use the "data transfer" process 200 to transfer data between the portable electronic device and the data management system. In one example, some applications may use a portion of the data transfer steps included in the "data transfer" process 200 for transferring application data. For example, consider a "hotel booking" application on the portable electronic device. A user may provide details of the hotel booking that may be sent to the NFC tag. The NFC tag may store the hotel booking information received from the user. On the next NFC tag activation, the hotel booking information of the user may be transferred to the data management system. In this case, the "hotel booking" application only used the steps 218-224 of the "data transfer" program for transferring application data.

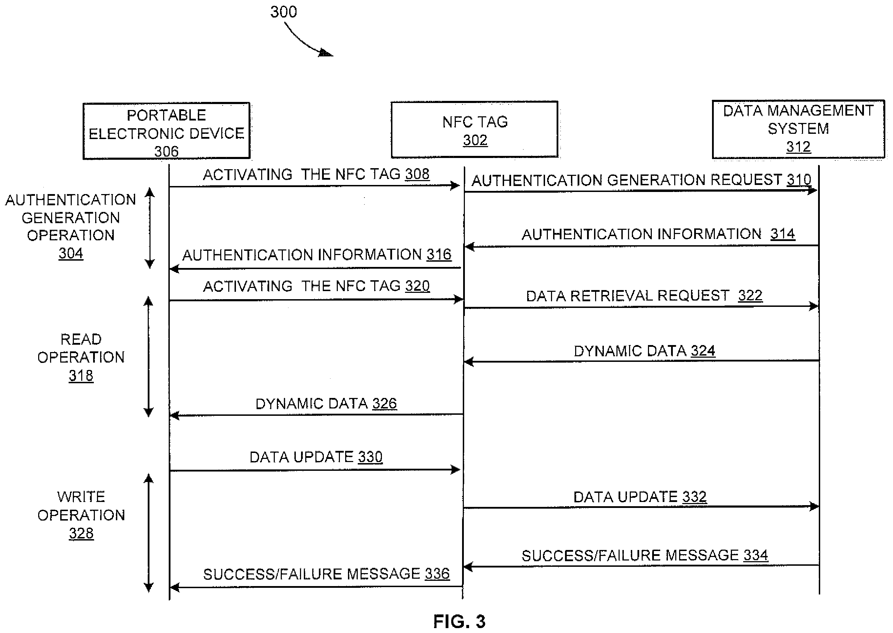

FIG. 3 is a sequence diagram 300 illustrating a method for transferring data by a NFC tag 302, according to an example. The data may be application data related to an application. The application data may be transferred based on "data transfer" program written to NFC tag 302. In one example, the data transfer operation for the application may be performed by executing the "data transfer" program written to the NFC tag 302. For performing the data transfer operation, authentication generation operation 304 is initially performed to generate authentication information for the portable electronic device 306 of a user. In one example, the authentication generation operation 304 is performed, when the NFC tag is activated 308 for the first time. When the NFC tag 302 is activated 308 by portable electronic device 306 for the first time, then an authentication generation request may be sent 310 to data management system 312. In response, the data management system 312 may generate authentication information for the portable electronic device 306. The data management system 306 forwards 314 the generated authentication information to the NFC tag 302. In one example, the authentication information may include a unique identification, generated by the data management system 312, for the portable electronic device 306. The NFC tag 302 may then forward 316 the authentication information to the portable electronic device 306. The generated authentication information may then be used for authenticating the portable electronic device 306, during any subsequent activation of the NFC tag 302 by the portable electronic device 306.

For example, consider a new portable electronic device of a set of portable electronic devices is activating an NFC tag for the first time. After the activation, the NFC tag may send an authentication generation request to the data management system that is associated with the set of portable electronic devices. The data management system may in response send authentication information corresponding to the new portable electronic device that may be used for identifying the new portable electronic device, whenever the portable electronic device activates the NFC tag.

Next, after the authentication generation operation 304, the "data transfer" program written to the NFC tag may be used to perform a read operation 318 to read static and/or dynamic data from the data management system 312. The dynamic data may be application data related to a particular application. In one example, the application may be stored on the portable electronic device 306. An application or an "app" is computer software that performs useful tasks. In one example, the application may use the "data transfer" program written to the NFC tag for performing the useful task. For reading the dynamic data, the NFC tag 302 may initially be activated 320. The activated NFC tag 302 may then send 322 data retrieval request to the data management system 312. The data retrieval request may be sent for retrieving data related to a particular application. Based on the received request, the data management system 312 may send 324 the requested data to the NFC tag 302. The NFC tag 302 may then forward 326 the received data, e.g., related to a particular application, to the portable electronic device 306. For example, assume that a "user profile" application is stored at the portable electronic device. For reading application data related to the "user profile" application, the NFC tag may send a data retrieval request to receive the dynamic "user profile" data, including the user's name, the user's current "cost center", the user's manager name, from a user data management system. A user name "ABCD", user's cost center "1001", and user' s manager name "XYZ" retrieved from the data management system may be received as dynamic "user profile" data at the NFC tag. The NFC tag may then forward the dynamic "user profile" data to the portable electronic device.

In one example, the "data transfer" program written to the NFC tag 302 may also be used to perform write operation 328 for writing data update related to an application to the data management system 312. For the write operation 328, the NFC tag 302 may receive 330 data update from the portable electronic device 306. The data update may be received in response to the dynamic data received at the portable electronic device 306, during the read operation 318. The data update may be triggered by a user of the portable electronic device 306. The user may input the data update at the portable electronic device 306 which may forward 330 the data update to the NFC tag 302. In one example, the data update received from the portable electronic device 306 may be stored in the NFC tag 302. The data update may be stored in the "data transfer" IC included in the NFC tag. Next, when the NFC tag 302 is activated, the data update stored in the NFC tag 302 may be forwarded 332 to the data management system 312. In response, the data management system 312 may send 334 a success or failure message depending on the success or failure in writing the data update to the data management system 312. Finally, the success/failure message is sent 336 to the portable electronic device 306.

In the "user profile" application example, the user may provide a data update to correct the "cost center" information stored in the data management system. The received "cost center" information "1111" may then be stored on the NFC tag. The correct "cost center" information "1111" stored on the NFC tag may be forwarded and stored at the data management system, for updating the "cost center" information at the data management system. The NFC tag therefore allows the two way data communication between the data management system and the portable electronic device without requiring the user to login to the data management system.

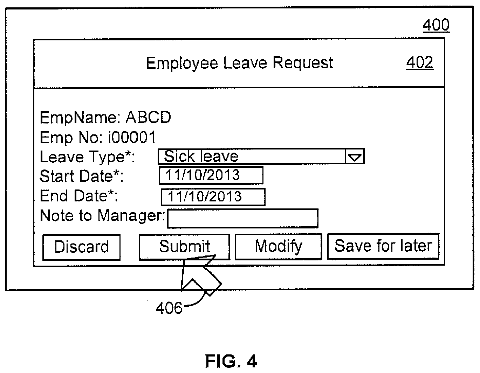

FIG. 4 is an exemplary user interface 400 of a portable electronic device displaying a graphical user interface of a leave request application 402, according to an example. The leave request application 402 is used by the portable electronic device to to perform a leave request. the leave request may indicate the start date and end date of a disconnection (no network connection) period of the portable electronic device. The leave request is forwarded to a NFC tag that stores the leave request data. The leave request may be sent in response to receiving a request (via a selection of a button of the portable electronic device) from a user of the portable electronic device. Based on the "data transfer" program, when the NFC tag storing the leave request data is activated, the stored leave request data is transferred to a data management system. The data management system may be a data server storing information on portable electronic devices. The data management system may then send a success message to the NFC tag when the leave request data is successfully written to the data management system, or a failure message when the leave request is not successfully written to the data management system. The NFC tag may forward the success or failure message to the portable electronic device.

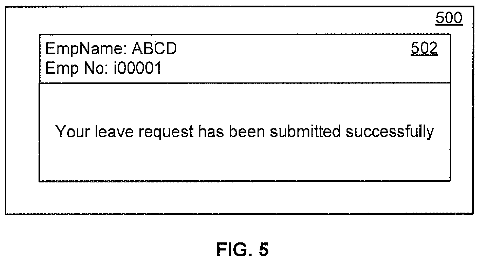

FIG. 5 is an exemplary user interface 500 of a portable electronic device displaying a success message 502, according to an example. The success message 502 is forwarded by the NFC tag to the portable electronic device, after the NFC tag receives the success message from the data management system. The success message 502 indicates that the leave request has been successfully updated to the data management system. The NFC tag therefore allows the portable electronic device to successfully update the leave request data to the data management system without requiring to login or connect to the data management system.

Some examples may include the above-described methods being written as one or more software components. These components, and the functionality associated may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some examples may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.
The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. A computer readable storage medium may be a non-transitory computer readable storage medium. Examples of a non-transitory computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. An example, may be implemented using Java, C++, or other object-oriented programming language and development tools. Another example may be implemented in hard-wired circuitry in place of, or in combination with machine readable software instructions.

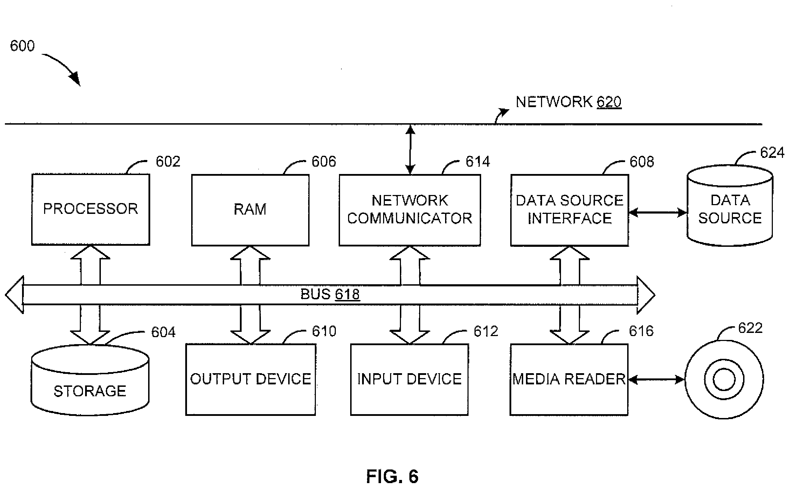

FIG. 6 is a block diagram of an exemplary computer system 600. The computer system 600 includes a processor 602 that executes software instructions or code stored on a computer readable storage medium 622 to perform the above-illustrated methods. The processor 602 can include a plurality of cores. The computer system 600 includes a media reader 616 to read the instructions from the computer readable storage medium 622 and store the instructions in storage 1004 or in random access memory (RAM) 606. The storage 604 provides a large space for keeping static data where at least some instructions could be stored for later execution. According to some examples, such as some in-memory computing system examples, the RAM 606 can have sufficient storage capacity to store much of the data required for processing in the RAM 606 instead of in the storage 604. In some examples, the data required for processing may be stored in the RAM 606. The stored instructions may be further compiled to generate other representations of the instructions and dynamically stored in the RAM 606. The processor 602 reads instructions from the RAM 606 and performs actions as instructed. According to one example, the computer system 600 further includes an output device 610 (e.g., a display) to provide at least some of the results of the execution as output including, but not limited to, visual information to users and an input device 612 to provide a user or another device with means for entering data and/or otherwise interact with the computer system 600. Such output devices 610 and input devices 612 could be joined by one or more additional peripherals to further expand the capabilities of the computer system 600. A network communicator 614 may be provided to connect the computer system 600 to a network 620 and in turn to other devices connected to the network 650 including other clients, servers, data stores, and interfaces, for instance. The modules of the computer system 600 are interconnected via a bus 618. Computer system 600 includes a data source interface 608 to access data source 624. The data source 624 can be accessed via one or more abstraction layers implemented in hardware or software. For example, the data source 624 may be accessed by network 620. In some examples the data source 624 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

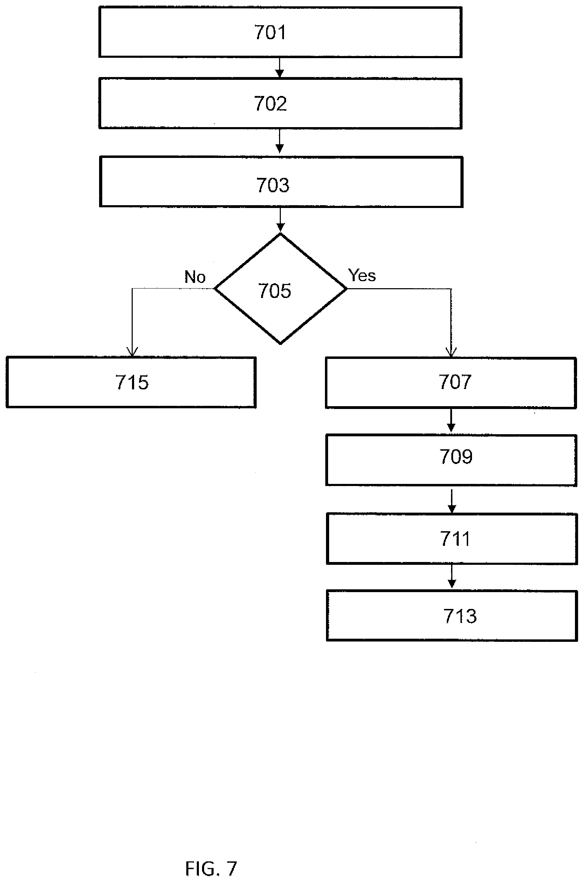

FIG. 7 is a flowchart of a method for controlling operation of a NFC tag e.g. the NFC tag 104 of FIG. 1. The NFC tag may comprise for example a printed circuit board or an integrated circuit e.g. 106 of FIG. 1, a chip card. The NFC tag may comprise for example a first and a second communication interface, a memory module, and a command processing unit. The memory module may comprise a non-volatile memory and a volatile memory.

For example, the first communication interface may be connected to a NFC antenna in order to communicate with at least one external mobile telecommunication device (e.g. as soon as the mobile telecommunication device taps on the NFC tag) of a set of mobile telecommunication devices such as electronic device 102 of FIG. 1. The set of mobile telecommunication devices may be authorized to access the NFC tag. And, the second communication interface may be used for a wired communication (e.g. via a serial link) with a database system or database server e.g. data management system 110 of FIG 1.

The first mobile telecommunication device may comprise a, smartphone, a PDA and the like.

The second communication interface may be connected to a line used in communication for transmitting or receiving power-supply voltage, transmission and receiving signal, and thereby communicates with the database system.

The memory module (e.g. the non-volatile memory) is configured to store access information corresponding to the set of mobile telecommunication devices. However; since the memory is limited in size a maximum data storage amount per mobile telecommunication device of the set of the mobile telecommunication devices may not be exceeded; otherwise the access information that exceeds that maximum may be stored in the database system. In another example, the access information that is stored in the NFC tag may be duplicated in the database system.

For example, the NFC tag may be used to control access of the set of mobile telecommunication devices to a data communication unit. The data communication unit may comprise for example a WiFi network access point and/or a GSM network access point. For example, the first mobile telecommunication device may contact the NFC tag to get an authorization or to be allowed to use access wireless network provided by the WiFi network access point may contact again the NFC tag for logging out e.g. this login and logout process may be needed for controlling the time the first mobile telecommunication device has spent connected to the WiFi e.g. per day.

For example, the access information associated with a given mobile telecommunication device of the set of mobile telecommunication devices may indicate the number of times the given mobile telecommunication device accessed (e.g. tapped) the NFC tag. In another example, the access information may indicate the time duration of access or usage of the given mobile telecommunication device into the WiFi e.g. per day.

The present method may allow to control access of the set of mobile telecommunication devices e.g. to the data communication unit (how long and often they connect).

The NFC tag may have multiple operation modes. For example, the NFC tag may operate in accordance with a first operation mode e.g. in the first operation mode the NFC tag may communicate using an NFC protocol.

In step 701, the NFC tag may receive from a first mobile telecommunication device of the set of telecommunication devices via the NFC antenna a data request for providing access information of the first mobile telecommunication device.

As the NFC is a short-range wireless communications technology, the data request may be automatically received or sent by for example "swiping," "tapping," "bumping" or otherwise moving the first mobile telecommunication device in close proximity to the NFC tag. The first mobile telecommunication device may use its built-in NFC reader or writer to transmit the data request to the NFC tag as soon as the NFC tag is detected within e.g. the 5-centimeter read range.

For example, the NFC tag may authenticate in step 702 (e.g. using the command processing unit) the first mobile telecommunication device to determine whether the first mobile telecommunication device is allowed to access the wireless network provided by the WiFi network access point. If it is allowed the NFC tag may send an unlock signal to the WiFi network access point to authorize access to the first mobile telecommunication device. In another example, the NFC tag may authenticate (e.g. using the command processing unit) the first mobile telecommunication device to determine that a user of the first mobile telecommunication device is allowed to access or enter a building that can only be accessed via an automatic door. And the NFC tag may send an unlock signal to an automatic door opening and closing system via the database system for enabling (e.g. an automatic door opens) access to the user.

In step 703, the NFC tag may determine an access frequency of the first mobile telecommunication device to the NFC tag e.g. how often the first mobile telecommunication device has communicated with the NFC tag. For example, the first mobile telecommunication device may have a daily login and logout to the WiFi network. In this case, the access frequency may for example be 60 times per month (i.e. 30 days).

In step 705, the NFC tag may compare the determined access frequency with a predefined maximum frequency. This may determine the type of access to data as explained below.

The maximum frequency may be determined using the number of mobile telecommunication devices of the set of mobile telecommunication devices and the memory size of the NFC tag (e.g. the size of the non-volatile memory). For example, the memory size may be equally divided over the set of mobile telecommunication devices. The portion of the memory size that is assigned to each mobile telecommunication device of the set of mobile telecommunication devices may be a maximum size. In another example, the memory size may be divided based on a ranking of the set of mobile telecommunication device based on a ranking criterion wherein each mobile telecommunication device of the set of mobile telecommunication devices may be assigned a maximum memory size depending on the rank assigned to the mobile telecommunication device. The ranking criterion may comprise for example the amount of data stored for each mobile telecommunication device in the database system and/or the NFC tag. The more data stored of a mobile telecommunication device the highest the ranking assigned to the mobile telecommunication device. Thus the maximum size may be either determined individually for each mobile telecommunication device of the set of telecommunication devices or be determined collectively (e.g. equally) for the set of mobile telecommunication device.

Using this maximum size defined individually for the first mobile telecommunication device or collectively for the set of mobile telecommunication devices, the maximum frequency may be determined because the maximum size and the maximum frequency are linearly related since in the present case of the data being stored is related to access information.

For example, in case the access information indicates the number of accesses per day of the first mobile telecommunication device, the size required for storing such access information may be the size for storing the number of accesses and corresponding days. Knowing that the access frequency of the first mobile telecommunication device is 60 times per month (e.g. 2 times per day) this may require the storage 30 times of the number of accesses (e.g. number 2) and the associated day (e.g. day 1 or day 2 etc.). If for example, the maximum size determined above can only contain 20 times the number of accesses and the corresponding days, then the maximum frequency may be 20 access per month (e.g. when two accesses are performed per day).

In case the access frequency is higher than the predetermined maximum frequency method steps 707-713 may be executed. The fact that the access frequency is higher than the predetermined maximum frequency may indicate that the access information of the first mobile telecommunication device are stored on the database system e.g. because there are not enough space to store them locally because of the high access frequency of the first mobile telecommunication device.

For that, in step 707, the NFC tag may establish a communication link to the database system. For example, the NFC tag may be connected to the database system via a serial link, and the establishing of the communication link may be performed by sending a link setup command to the database system via the serial ink for establishing the communication link. In another example, the communication link between the NFC tag and the database system may be a logical link wherein the physical transmission of data is done between the NFC tag and the database system via the mobile telecommunication device. This may be advantageous as it may provide a controlled access to data using the NFC tag i.e. the access information has to pass through the NFC tag before being used by the first mobile telecommunication device.

In step 709, the NFC tag may switch its operation to a second operation mode for communication with the database system e.g. via the second communication interface e.g. instead of communicating via the NFC protocol another communication protocol may be used in order to communicate through the serial link with the database system. In this case, the NFC tag may be power supplied by the database system.

In step 711, the NFC tag may forward the data request to the database system using the communication link.

In response to the forwarded data request the NFC tag may receive, in step 713, the access information of the first mobile telecommunication device from the database system via the communication link. The access information received from the database system may be stored (e.g. temporally) in the volatile memory before until performing step 713.

In step 713, the NFC tag may switch back to the first operation mode and send the received access information to the first mobile telecommunication device via the NFC antenna.

In case the access frequency is smaller than the predetermined maximum frequency, the NFC tag may send in step 715 the first mobile telecommunication device via the NFC antenna the access information of the first mobile telecommunication device that are stored locally (e.g. because of their size being smaller than the maximum size).

In the above description, numerous specific details are set forth to provide a thorough understanding of examples. One skilled in the relevant art will recognize, however that the examples can be practiced without one or more of the specific details or with other methods, components, techniques, etc. In other instances, well-known operations or structures are not shown or described in details.
Although the processes illustrated and described herein include series of steps, it will be appreciated that the different examples are not limited by the illustrated ordering of steps, as some steps may occur in different orders, some concurrently with other steps apart from that shown and described herein. In addition, not all illustrated steps may be required to implement a methodology in accordance with the one or more examples. Moreover, it will be appreciated that the processes may be implemented in association with the apparatus and systems illustrated and described herein as well as in association with other systems not illustrated.

## Claims

1. A communication method for controlling operation of a near field communication, NFC, tag (104), wherein the NFC tag (104) is operating in accordance with a first operation mode, the method comprising the steps of :
- Receiving, a data request sent by a first mobile telecommunication device (102), the data request being received via a NFC antenna of the NFC tag for providing access information of the first mobile telecommunication device (102);
- determining an access frequency of the first mobile telecommunication device (102) to the NFC tag (104), wherein the access frequency is the number of accesses per time;
- in response to a determination that the access frequency is higher than a predetermined maximum frequency;
• establishing a communication link to a database system (110) connected to the NFC tag (104);
• switching the NFC tag (104) to a second operation mode for communication with the database system (110);
• forwarding the data request to the database system (110) using the communication link;
• receiving the access information from the database system (110) via the communication link;
• switching back to the first operation mode and sending the received access information to the first mobile telecommunication device (102) via the NFC antenna.
- in response to a determination that the access frequency is smaller than the predetermined maximum frequency sending locally stored access information data in response to the data request to the first mobile telecommunication device (102).

2. The method of claim 1, the determining of the access frequency further comprising: in response to a determination that the number of access of the access frequency is an odd number rejecting the data request.

3. The method of any of the preceding claims, wherein the first mobile telecommunication device is part of a set of mobile telecommunication devices that are authorized to access the NFC tag, wherein the maximum frequency is determined using the number of mobile telecommunication devices of the set of mobile telecommunication devices and a memory size of the NFC tag.

4. The method of any of the preceding claims, wherein the first mobile telecommunication device is part of a set of mobile telecommunication devices that are authorized to access the NFC tag, the method further comprising:
- receiving from a second mobile telecommunication device of the set of mobile telecommunication devices via the NFC antenna another data request for providing access information of the second mobile telecommunication device;
- in response to a determination that an access frequency of the second mobile telecommunication device is equal to the access frequency of the first mobile telecommunication device;
- sending an identification address of the first mobile telecommunication device to the second mobile telecommunication device in response to the received data request.

5. The method of any of the preceding claims, further comprising:
- receiving via the NFC antenna from the first mobile telecommunication device a data update in response to receiving the requested data at the first mobile telecommunication device;
- switching to the second operation mode and forwarding the data update to the database system using the communication link.

6. The method of claim 5, the switching step comprising:
- authenticating the first mobile telecommunication device; and
- in case the authentication is successful, forwarding the stored data update to the database system.

7. The method of any of the preceding claims, further comprising: sending an unlock signal to a data communication unit via the database system for authorizing access of the first telecommunication device to the data communication unit.

8. The method of any of the preceding claims, wherein the access information comprises at least one of:
- a number of accesses of the first mobile telecommunication device to the NFC tag;
- an average access duration per a predefined time period of the first mobile telecommunication device.

9. The method of any of the preceding claims, in response to a determination that the access frequency is smaller than a predetermined minimum frequency rejecting the data request.

10. The method of any of the preceding claims, wherein the NFC tag is connected to the database system via a serial link, wherein establishing the communication link comprises sending a link setup command to the database system via the serial ink for establishing the communication link.

11. The method of any of the preceding claims, wherein before the switching to the second operation mode the NFC tag is powered using the NFC antenna, wherein after establishing the communication link the NFC tag is power supplied by the database system via a serial link between the NFC tag and the database system.

12. A NFC tag (104) comprising a NFC antenna, the NFC tag operating in a first operation mode, wherein the NFC tag (104) comprises :
- means for receiving a data request sent by a first mobile telecommunication device (102), the data request being received via a NFC antenna of the NFC tag (104) for providing access information of the first mobile telecommunication device (102); **characterized by**
- means for determining an access frequency of the first mobile telecommunication device (102) to the NFC tag (104), wherein the access frequency is the number of accesses per time;
- means for, in response to a determination that the access frequency is higher than a predetermined maximum frequency,
• establishing a communication link to a database system (110) connected to the NFC tag (104);
• switching the NFC tag (104) to a second operation mode for communication with the database system (110);
• forwarding the data request to the database system (110) using the communication link;
• receiving the access information from the database system via the communication link;
• switching back to the first operation mode and sending the received access information to the first mobile telecommunication device (102) via the NFC antenna.
- means for, in response to a determination that the access frequency is smaller than the predetermined maximum frequency, sending locally stored access information data in response to the data request to the first mobile telecommunication device (102).

13. An access control system comprising a NFC tag according to claim 12, a mobile telecommunication device and a database server.

14. The access control system of claim 13, further comprising a data communication unit providing network access to the mobile telecommunication device.

## Patentansprüche

1. Kommunikationsverfahren zum Steuern eines Betriebs eines Nahfeldkommunikations-, NF-Tags (104), wobei das NF-Tag (104) gemäß einem ersten Betriebsmodus operiert, wobei das Verfahren die folgenden Schritte umfasst:
- Empfangen einer Datenabfrage, die von einer ersten mobilen Telekommunikationsvorrichtung (102) gesendet wird, wobei die Datenabfrage über eine NFC-Antenne des NFC-Tags empfangen wird, nach einer Bereitstellung von Zugriffsinformationen in Bezug auf die erste mobile Telekommunikationsvorrichtung (102);
- Bestimmen einer Frequenz der Zugriffe der ersten mobilen Telekommunikationsvorrichtung (102) auf das NFC-Tag (104), wobei die Frequenz der Zugriffe die Zugriffszahl bezogen auf die Zeit ist;
- als Antwort auf eine Bestimmung, dass die Frequenz der Zugriffe höher ist als eine vorgegebene maximale Frequenz:
• Einrichten einer Kommunikationsverbindungsstrecke zu einem Datenbanksystem (110), das mit dem NFC-Tag (104) verbunden ist,
• Umschalten des NFC-Tags (104) auf einen zweiten Betriebsmodus für eine Kommunikation mit dem Datenbanksystem (110);
• Weiterleiten der Datenabfrage an das Datenbanksystem (110) unter Verwendung der Kommunikationsverbindungsstrecke;
• Empfangen der Zugriffsinformationen vom Datenbanksystem (110) über die Kommunikationsverbindungsstrecke;
• Zurückschalten in den ersten Betriebsmodus und Senden der empfangenen Zugriffsinformationen zur ersten mobilen Telekommunikationsvorrichtung (102) über die NFC-Antenne
- als Antwort auf eine Bestimmung, dass die Frequenz der Zugriffe geringer ist als die vorgegebene maximale Frequenz, Senden lokal gespeicherter Zugriffsinformationsdaten als Antwort auf die Datenabfrage an die erste mobile Telekommunikationsvorrichtung (102).

2. Verfahren nach Anspruch 1, wobei das Bestimmen der Frequenz der Zugriffe ferner umfasst: als Antwort auf eine Bestimmung, dass die Zugriffszahl der Frequenz der Zugriffe eine ungerade Zahl ist, Zurückweisen der Datenabfrage.

3. Verfahren nach einem der vorstehenden Ansprüche, wobei die erste mobile Telekommunikationsvorrichtung Teil eines Satzes mobiler Telekommunikationsvorrichtungen ist, die autorisiert sind, auf das NFC-Tag zuzugreifen, wobei die maximale Frequenz unter Verwendung der Anzahl mobiler Telekommunikationsvorrichtungen des Satzes mobiler Telekommunikationsvorrichtungen und einer Speichergröße des NFC-Tags bestimmt wird.

4. Verfahren nach einem der vorangehenden Ansprüche, wobei die erste mobile Telekommunikationsvorrichtung Teil eines Satzes mobiler Telekommunikationsvorrichtungen ist, die autorisiert sind, auf das NFC-Tag zuzugreifen, wobei das Verfahren ferner umfasst:
- Empfangen einer anderen Datenabfrage zur Bereitstellung von Zugriffsinformationen in Bezug auf die zweite mobile Telekommunikationsvorrichtung von einer zweiten mobilen Telekommunikationsvorrichtung des Satzes mobiler Telekommunikationsvorrichtungen über die NFC-Antenne;
- als Antwort auf eine Bestimmung, dass eine Frequenz der Zugriffe der zweiten mobilen Telekommunikationsvorrichtung der Frequenz der Zugriffe der ersten mobilen Telekommunikationsvorrichtung gleich ist;
- Senden einer Identifikationsadresse der ersten mobilen Telekommunikationsvorrichtung an die zweite mobile Telekommunikationsvorrichtung als Antwort auf die empfangene Datenabfrage.

5. Verfahren nach einem der vorangehenden Ansprüche, ferner umfassend:
- Empfangen einer Datenaktualisierung von der ersten mobilen Telekommunikationsvorrichtung über die NFC-Antenne als Antwort auf den Empfang der abgefragten Daten an der ersten mobilen Telekommunikationsvorrichtung;
- Umschalten in den zweiten Betriebsmodus und Weiterleiten der Datenaktualisierung an das Datenbanksystem unter Verwendung der Kommunikationsverbindungsstrecke.

6. Verfahren nach Anspruch 5, wobei der Schritt des Umschaltens umfasst:
- Authentifizieren der ersten mobilen Telekommunikationsvorrichtung; und
- im Falle einer erfolgreichen Authentifizierung, Weiterleiten der gespeicherten Datenaktualisierung an das Datenbanksystem.

7. Verfahren nach einem der vorangehenden Ansprüche, ferner umfassend: Senden eines Freigabesignals an die Datenkommunikationseinheit über das Datenbanksystem, um einen Zugriff der ersten Telekommunikationsvorrichtung auf die Datenkommunikationseinheit zu autorisieren.

8. Verfahren nach einem der vorangehenden Ansprüche, wobei die Zugriffsinformationen mindestens eines der folgenden umfassen:
- eine Anzahl der Zugriffe der ersten mobilen Telekommunikationsvorrichtung auf das NFC-Tag,
- eine durchschnittliche Dauer der Zugriffe der ersten mobilen Telekommunikationsvorrichtung pro vordefiniertem Zeitraum.

9. Verfahren nach einem der vorstehenden Ansprüche, wobei als Antwort auf eine Bestimmung, dass die Frequenz der Zugriffe kleiner ist als eine vorgegebene minimale Frequenz, die Datenabfrage zurückgewiesen wird.

10. Verfahren nach einem der vorstehenden Ansprüche, wobei das NFC-Tag mit dem Datenbanksystem über eine serielle Verbindungsstrecke verbunden ist, wobei das Einrichten der Kommunikationsverbindungsstrecke das Senden eines Verbindungsstreckenaufbaubefehls an das Datenbanksystem über die serielle Schnittstelle umfasst, um die Kommunikationsverbindungsstrecke einzurichten.

11. Verfahren nach einem der vorstehenden Ansprüche, wobei das NFC-Tag vor dem Umschalten in den zweiten Betriebsmodus unter Verwendung der NFC-Antenne mit Leistung versorgt wird, wobei das NFC-Tag nach der Einrichtung der Kommunikationsverbindungsstrecke vom Datenbanksystem über eine serielle Verbindungsstrecke zwischen dem NFC-Tag und dem Datenbanksystem mit Leistung versorgt wird.

12. NFC-Tag (104), eine NFC-Antenne umfassend, wobei das NFC-Tag in einem ersten Betriebsmodus operiert, wobei das NFC-Tag (104) umfasst:
- eine Einrichtung zum Empfangen einer Datenabfrage, die von einer ersten mobilen Telekommunikationsvorrichtung (102) gesendet wird, wobei die Datenabfrage über eine NFC-Antenne des NFC-Tags (104) empfangen wird, nach einer Bereitstellung von Zugriffsinformationen in Bezug auf die erste mobile Telekommunikationsvorrichtung (102); **gekennzeichnet durch**
- eine Einrichtung zum Bestimmen einer Frequenz der Zugriffe der ersten mobilen Telekommunikationsvorrichtung (102) auf das NFC-Tag (104), wobei die Frequenz der Zugriffe die Zugriffszahl bezogen auf die Zeit ist;
- eine Einrichtung, um als Antwort auf eine Bestimmung, dass die Frequenz der Zugriffe höher ist als eine vorgegebene maximale Frequenz,
• eine Kommunikationsverbindungsstrecke mit einem Datenbanksystem (110) einzurichten, das mit dem NFC-Tag (104) verbunden ist;
• das NFC-Tags (104) auf einen zweiten Betriebsmodus für eine Kommunikation mit dem Datenbanksystem (110) umzuschalten;
• die Datenabfrage unter Verwendung der Kommunikationsverbindungsstrecke an das Datenbanksystem (110) weiterzuleiten;
• die Zugriffsinformationen über die Kommunikationsverbindungsstrecke vom Datenbanksystem (110) zu empfangen;
• in den ersten Betriebsmodus zurückzuschalten und die empfangenen Zugriffsinformationen über die NFC-Antenne zur ersten mobilen Telekommunikationsvorrichtung (102) zu senden,
- eine Einrichtung, um als Antwort auf eine Bestimmung, dass die Frequenz der Zugriffe geringer ist als die vorgegebene maximale Frequenz, lokal gespeicherte Zugriffsinformationsdaten als Antwort auf die Datenabfrage an die erste mobile Telekommunikationsvorrichtung (102) zu senden.

13. Zugriffssteuersystem, ein NFC-Tag nach Anspruch 12, eine mobile Telekommunikationsvorrichtung und einen Datenbankserver umfassend.

14. Zugriffssteuersystem nach Anspruch 13, ferner eine Datenkommunikationseinheit umfassend, die einen Netzwerkzugriff für die mobile Telekommunikationsvorrichtung bereitstellt.

## Revendications

1. Procédé de communication destiné à une opération de contrôle d'une étiquette NFC (104) de communication en champ proche, où l'étiquette NFC (104) fonctionne selon un premier mode de fonctionnement, le procédé comprenant les étapes :
- de réception d'une demande de données envoyée par un premier dispositif mobile de télécommunication (102), la demande de données étant reçue par le biais d'une antenne NFC de l'étiquette NFC pour procurer une information d'accès du premier dispositif mobile de télécommunication (102) ;
- de détermination d'une fréquence d'accès du premier dispositif mobile de télécommunication (102) vers l'étiquette NFC (104), où la fréquence d'accès est le nombre d'accès par unité de temps ;
- en réponse à une détermination que la fréquence d'accès est plus élevée qu'une fréquence maximale prédéterminée :
• l'établissement d'une ligne de communication en direction d'un système de la base de données (110) connecté à l'étiquette NFC (104) ;
• la commutation de l'étiquette NFC (104) vers un second mode de fonctionnement pour la communication avec le système de la base de données (110) ;
• le transfert de la demande de données au système de la base de données (110) en utilisant la ligne de communication ;
• la réception de l'information d'accès en provenance du système de la base de données (110) par le biais de la ligne de communication ;
• la commutation pour revenir au premier mode de fonctionnement et l'envoi de l'information d'accès reçue au premier dispositif mobile de télécommunication (102) par le biais de l'antenne NFC,
- en réponse à une détermination que la fréquence d'accès est inférieure à la fréquence maximale prédéterminée, l'envoi de données d'information d'accès stockées localement en réponse à la demande de données au premier dispositif mobile de télécommunication (102).

2. Procédé selon la revendication 1, la détermination de la fréquence d'accès comprenant en outre : en réponse à une détermination que le nombre d'accès de la fréquence d'accès est un nombre impair, le rejet de la demande de données.

3. Procédé selon l'une quelconque des revendications précédentes, dans lequel le premier dispositif mobile de télécommunication fait partie d'un ensemble de dispositifs mobiles de télécommunication qui sont autorisés à accéder à l'étiquette NFC, où la fréquence maximale est déterminée en utilisant le nombre de dispositifs mobiles de télécommunication de l'ensemble des dispositifs mobiles de télécommunication et une capacité de mémoire de l'étiquette NFC.

4. Procédé selon l'une quelconque des revendications précédentes, dans lequel le premier dispositif mobile de télécommunication fait partie d'un ensemble de dispositifs mobiles de télécommunication qui sont autorisés à accéder à l'étiquette NFC, le procédé comprenant en outre :
- la réception en provenance d'un second dispositif mobile de télécommunication de l'ensemble des dispositifs mobiles de télécommunication, par le biais de l'antenne NFC, d'une autre demande de données pour procurer l'information d'accès du second dispositif mobile de télécommunication ;
- en réponse à la détermination qu'une fréquence d'accès du second dispositif mobile de télécommunication est égale à la fréquence d'accès du premier dispositif mobile de télécommunication :
- l'envoi d'une adresse d'identification du premier dispositif mobile de télécommunication au second dispositif mobile de télécommunication en réponse à la demande de données reçue.

5. Procédé selon l'une quelconque des revendications précédentes, comprenant en outre :
- la réception, par le biais de l'antenne NFC, en provenance du premier dispositif mobile de télécommunication, d'une mise à jour de données en réponse à la réception des données demandées au niveau du premier dispositif mobile de télécommunication ;
- la commutation vers le second mode de fonctionnement et le transfert de la mise à jour des données au système de la base de données en utilisant la ligne de communication.

6. Procédé selon la revendication 5, l'étape de commutation comprenant :
- l'authentification du premier dispositif mobile de télécommunication ; et
- dans le cas où l'authentification est réussie, le transfert de la mise à jour des données stockées au système de la base de données.

7. Procédé selon l'une quelconque des revendications précédentes, comprenant en outre : l'envoi d'un signal de déverrouillage en direction d'une unité de communication de données par le biais du système de la base de données pour autoriser l'accès du premier dispositif de télécommunication vers l'unité de communication des données.

8. Procédé selon l'une quelconque des revendications précédentes, dans lequel l'information d'accès comprend au moins une information parmi :
- un nombre d'accès du premier dispositif mobile de télécommunication vers l'étiquette NFC ;
- une durée moyenne d'accès pour un laps de temps prédéfini du premier dispositif mobile de télécommunication.

9. Procédé selon l'une quelconque des revendications précédentes, en réponse à ce qu'une détermination que la fréquence d'accès est inférieure à une fréquence minimale prédéterminée, le rejet de la demande de données.

10. Procédé selon l'une quelconque des revendications précédentes, dans lequel l'étiquette NFC est connectée au système de la base de données par le biais d'une liaison en série, où l'établissement de la ligne de communication comprend l'envoi d'une commande de configuration de la liaison au système de la base de données par le biais de la liaison en série destinée à l'établissement de la ligne de communication.

11. Procédé selon l'une quelconque des revendications précédentes, dans lequel, avant la commutation vers le second mode de fonctionnement, l'étiquette NFC est alimentée en utilisant l'antenne NFC, où, après l'établissement de la ligne de communication, l'étiquette NFC est alimentée en énergie par le système de la base de données par le biais d'une liaison en série entre l'étiquette NFC et le système de la base de données.

12. Etiquette NFC (104) comprenant une antenne NFC, l'étiquette NFC fonctionnant dans un premier mode de fonctionnement, où l'étiquette NFC (104) comprend :
- des moyens de réception d'une demande de données envoyée par un premier dispositif mobile de télécommunication (102), la demande de données étant reçue par le biais d'une antenne NFC de l'étiquette NFC (104) pour procurer une information d'accès du premier dispositif mobile de télécommunication (102) ; **caractérisée par**
- des moyens de détermination d'une fréquence d'accès du premier dispositif mobile de télécommunication (102) vers l'étiquette NFC (104), où la fréquence d'accès est le nombre d'accès par unité de temps ;
- des moyens pour, en réponse à une détermination que la fréquence d'accès est plus élevée qu'une fréquence maximale prédéterminée,
• l'établissement d'une ligne de communication en direction d'un système de la base de données (110) connecté à l'étiquette NFC (104) ;
• la commutation de l'étiquette NFC (104) vers un second mode de fonctionnement pour la communication avec le système de la base de données (110) ;
• le transfert de la demande de données vers le système de la base de données (110) en utilisant la ligne de communication ;
• la réception de l'information d'accès en provenance du système de la base de données par le biais de la ligne de communication ;
• la commutation pour revenir vers le premier mode de fonctionnement et l'envoi de l'information d'accès reçue au premier dispositif mobile de télécommunication (102) par le biais de l'antenne NFC,
- des moyens pour, en réponse à une détermination que la fréquence d'accès est inférieure à la fréquence maximale prédéterminée, envoyer les données d'information d'accès stockées localement en réponse à la demande de données en direction du premier dispositif mobile de télécommunication (102) .

13. Système de contrôle d'accès comprenant une étiquette NFC selon la revendication 12, un dispositif mobile de télécommunication et un serveur de base de données.

14. Système de contrôle d'accès selon la revendication 13, comprenant en outre une unité de communication des données procurant un accès réseau au dispositif mobile de télécommunication.
